# EUROPEAN PATENT APPLICATION

(11) **EP 4 528 522 A1**
(43) Date of publication of application: **26.03.2025**
(21) Application number: 23819055.7
(22) Date of filing: 05.06.2023
(51) Int. Cl.: G06F 13/38

(54) **NETWORK DEVICE, DEVICE COMMUNICATION METHOD, AND COMMUNICATION SYSTEM**

(30) Priority: 08.06.2022 CN 202210644124; 30.06.2022 CN 202210762704
(71) Applicant: Huawei Technologies Co., Ltd., Shenzhen, Guangdong 518129 (CN)
(72) Inventor: YANG, Yumeng, Shenzhen, Guangdong 518129 (CN); MU, Tong, Shenzhen, Guangdong 518129 (CN); ZHUANG, Yan, Shenzhen, Guangdong 518129 (CN); WU, Yuefeng, Shenzhen, Guangdong 518129 (CN)
(74) Representative: Gill Jennings & Every LLP
(86) International application number: PCT/CN2023/098244
(87) International publication number: WO 2023/236890

(57) **Abstract**

Embodiments of this application disclose a network device, a device communication method, and a communication system. The network device may meet requirements of different scenarios, so that communication quality of the network device in the different scenarios is maintained at a good level. The network device in embodiments of this application includes: a bus management module, configured to adjust at least one of a bus scale, a channel capacity, or a power supply or receiving state, where the bus scale includes at least one of a quantity of devices accessing a bus and a link length, the channel capacity includes a bandwidth, and the power supply or receiving state includes at least one of sequential power-on, power-on of a new node, or power-off of a faulty node.

## Description

This application claims priorities to Chinese Patent Application No. CN202210644124.8, filed with the China National Intellectual Property Administration on June 8, 2022 and entitled "TWO-WIRE NETWORK TRANSMISSION DEVICE AND SYSTEM", and to Chinese Patent Application No. CN202210762704.7, filed with the China National Intellectual Property Administration on June 30, 2022 and entitled "NETWORK DEVICE, DEVICE COMMUNICATION METHOD, AND COMMUNICATION SYSTEM", both of which are incorporated herein by reference in their entireties.

### TECHNICAL FIELD

This application relates to the field of network communication, and in particular, to a network device, a device communication method, and a communication system.

### BACKGROUND

When a network device in an internet of things scenario is configured based on a requirement of the internet of things scenario, a point-to-point topology and a bus-type point-to-multipoint topology that meet different requirements can be obtained. The internet of things scenario includes a campus scenario such as a building or firefighting automation, an industrial scenario such as a smart meter or an onsite network, a vehicle-mounted scenario, and the like.

In a conventional method, considering a requirement of a scenario, a network device in the scenario adapts to a corresponding single-pair technology. For example, power line communication (power line communication, PLC) and a controller area network (controller area network, CAN) support the point-to-multipoint topology, but cannot consider both a long distance and a large bandwidth. RS485 supports multi-node communication, but does not support online power supply.

In general, a conventional network device meets a requirement of a scenario. When the requirement of the scenario changes, the network device may no longer meet the requirement of the scenario. As a result, quality of communication between network devices in the scenario is poor.

### SUMMARY

This application provides a network device, a device communication method, and a communication system. The network device includes a bus management module. The bus management module is configured to adjust at least one of a bus scale, a channel capacity, or a power supply or receiving state. The adjustment of the bus management module enables the network device to meet requirements of different scenarios. Therefore, an adaptive capability of the network device is improved, and communication quality of the network device in the different scenarios is maintained at a good level.

A first aspect of this application provides a network device, including a bus management module, configured to adjust at least one of a bus scale, a channel capacity, or a power supply or receiving state. The bus scale is a bus scale of a communication system in which the network device is located, and includes a quantity of devices accessing a bus and/or a link length in the communication system. The channel capacity includes a bandwidth. The power supply or receiving state includes at least one of sequential power-on, power-on of a new node, or power-off of a faulty node. Sequential power-on includes: when no slave device in the communication system is powered on, sequentially supplying power to a slave device that needs to be powered on online. Power-on of the new node is: when there is a slave device that is powered on in the communication system, powering on a slave device that is not powered on. Power-off of the faulty node is powering off a faulty node in the communication system, so that a faulty device is isolated from another device, to avoid impact on the another device in the communication system.

It can be learned from the foregoing technical solutions that this application has the following advantages. The network device can be adjusted in a plurality of dimensions via the bus management module, so that the network device meets requirements of different scenarios. Therefore, an adaptive capability of the network device is improved, and communication quality of the network device in the different scenarios is maintained at a good level.

In a possible implementation of the first aspect, the bus management module can adjust the bus scale and/or the channel capacity by reducing a quantity of devices accessing the bus in a same time period.

In a possible implementation of the first aspect, the bus management module connects paths between the network device and a part of slave devices in the communication system, to reduce the quantity of devices accessing the bus in the same time period. For the part of slave devices, there may be one or more slave devices. This is not specifically limited herein.

In this application, the bus management module can reduce, in a manner of connecting the paths between the network device and the part of slave devices, the quantity of devices accessing the bus in the same time period, so that the technical solutions of this application are implementable, and practicability of the technical solutions is improved.

In a possible implementation of the first aspect, the network device further includes a spectrum configuration module, configured to allocate a spectrum resource transmitted on the bus.

In a possible implementation of the first aspect, that the spectrum configuration module allocates the spectrum resource transmitted on the bus may be allocating different frequency band resources to different services, so that a plurality of different services are carried in different frequency bands for transmission on a single pair at a same moment, and the plurality of services are simultaneously performed. Alternatively, a same frequency band may be allocated to different services, so that the different services are carried out in different time periods based on the same frequency band resource.

In this application, the spectrum resource transmitted on the bus is managed based on the spectrum configuration module, so that requirements of different scenarios are further met, and a basis for implementing service association is also provided.

In a possible implementation of the first aspect, the network device further includes a negotiation module. The negotiation module can obtain a topology type of a target link, where the topology type includes a point-to-point topology or a point-to-multipoint topology. The target link is a target link in the communication system in which the network device is located, and the target link includes at least two network devices. The negotiation module can further determine a working mode of the network device based on the topology type. Then, the negotiation module sets, through cooperation of another module, the network device to the working mode determined by the negotiation module.

In this application, the negotiation module determines, based on the topology type of the target link in which the network device is located, the working mode that adapts to the topology type, so that the working mode of the network device meets a requirement of an actual application scenario.

In a possible implementation of the first aspect, the network device further includes an echo cancellation module. When the obtained topology type of the target link is the point-to-point topology, the negotiation module determines that the working module of the network device includes enabling an echo cancellation function, to ensure that communication between network devices is not affected by an echo. The negotiation module sends an enabling instruction to the echo cancellation module. The echo cancellation module receives the instruction, and enables the echo cancellation function based on the enabling instruction.

In this application, when the topology type of the target link is the point-to-point topology, the echo cancellation function is enabled through collaboration between the negotiation module and the echo cancellation module, so that the network device works in a full-duplex mode and is not interfered by the echo, to ensure normal communication between the devices.

In a possible implementation of the first aspect, the network device further includes a modulation and demodulation module, configured to set a modulation scheme and/or a demodulation scheme of the network device. When the topology type of the target link is the point-to-multipoint topology, the negotiation module can determine that the working mode of the network device includes that the modulation scheme of the network device is multi-carrier modulation, and send first modulation information to the modulation and demodulation module, where the first modulation information indicates the multi-carrier modulation. The modulation and demodulation module receives the first modulation information from the negotiation module, and sets the modulation scheme of the network device to the multi-carrier modulation based on the first modulation information. When the topology type of the target link is the point-to-point topology, the negotiation module can determine that the working mode of the network device includes that the modulation scheme of the network device is single-carrier modulation, and send second modulation information to the modulation and demodulation module, where the second modulation information indicates the single-carrier modulation. The modulation and demodulation module receives the second modulation information from the negotiation module, and sets the modulation scheme of the network device to the single-carrier modulation based on the second modulation information. In addition, it may be understood that, because the demodulation scheme corresponds to the modulation scheme, when the modulation scheme is determined, the corresponding demodulation scheme is also actually determined.

In this application, the negotiation module can determine different modulation and demodulation schemes based on different topology types, to better meet requirements of corresponding scenarios, and improve flexibility and practicability of the technical solutions.

In a possible implementation of the first aspect, in addition to determining the working mode of the network device based on the topology type of the target link, the negotiation module may further obtain link transmission information of the target link, and determine the working mode of the network device with reference to the topology type of the target link and the link transmission information. Then, the negotiation module sets, through cooperation of another module, the network device to the working mode determined by the negotiation module.

In this application, the negotiation module may further determine, based on the topology type of the target link in which the network device is located and the link transmission information, the working mode that adapts to the topology type and the link transmission information, so that the working mode of the network device meets a requirement of an actual application scenario.

In a possible implementation of the first aspect, the network device is a first network device, and the first network device further includes a time configuration module. The link transmission information includes a signal transmission feature, and the signal transmission feature includes information about a frequency band in which a second network device sends a second signal to the first network device. When the signal transmission feature indicates that the frequency band of the second signal overlaps a frequency band in which the first network device sends a first signal to the second network device, the negotiation module determines that the working mode of the first network device includes that a first time period corresponding to the first signal does not intersect with a second time period corresponding to the second signal. The first time period includes a time period in which the first network device sends the first signal, and the second time period includes a time period in which the second network device sends the second signal. After determining the working mode, the negotiation module sends time period configuration information to the time configuration module, where the time period configuration information indicates that the first time period does not intersect with the second time period. The time configuration module receives the time period configuration information, and sets, based on the time period configuration information, the first time period in which the first network device sends the first signal to the second network device, to enable the first time period not to intersect with the second time period. Optionally, the first network device may be a master device in the point-to-multipoint topology, and the second network device may be a slave device in the point-to-multipoint topology.

In this application, when the frequency band in which the second network device sends the second signal to the first network device overlaps the frequency band in which the first network device sends the first signal to the second network device, the negotiation module collaborates with the time configuration module to set the first time period in which the first network device sends the first signal to the second network device not to intersect with the second time period in which the second network device sends the second signal to the first network device. Therefore, normal communication between the first network device and the second network device is ensured, and the first network device and the second network device can identify the signals from each other, so that the technical solutions of this application are implementable.

In a possible implementation of the first aspect, the network device is a first network device, and the first network device further includes the spectrum configuration module. The link transmission information includes a signal transmission feature, and the signal transmission feature includes information about a time period in which a second network device sends a second signal to the first network device. When the signal transmission feature indicates that the time period of the second signal overlaps a time period in which the first network device sends a first signal to the second network device, the negotiation module determines that the working mode of the first network device includes that a first frequency band corresponding to the first signal does not intersect with a second frequency band corresponding to the second signal. After determining the working mode, the negotiation module sends frequency band configuration information to the spectrum configuration module, where the frequency band configuration information indicates that the first frequency band does not intersect with the second frequency band. The spectrum configuration module receives the frequency band configuration information, and sets, based on the frequency band configuration information, the first frequency band in which the first network device sends the first signal to the second network device, to enable the first frequency band not to intersect with the second frequency band. Optionally, the first network device may be a master device in the point-to-multipoint topology, and the second network device may be a slave device in the point-to-multipoint topology.

In this application, when the time period in which the second network device sends the second signal to the first network device overlaps the time period in which the first network device sends the first signal to the second network device, the negotiation module collaborates with the spectrum configuration module to set the first frequency band in which the first network device sends the first signal to the second network device not to intersect with the second frequency band in which the second network device sends the second signal to the first network device. Therefore, normal communication between the first network device and the second network device is ensured, and the first network device and the second network device can identify the signals from each other, so that the technical solutions of this application are implementable. In addition, regardless of whether time period overlapping or frequency band overlapping occurs on the first signal and the second signal, the technical solutions of this application have corresponding solutions. Practicability of the technical solutions of this application is further improved.

In a possible implementation of the first aspect, the network device further includes a negotiation module and an error correction encoding and decoding module. The negotiation module can obtain link transmission information. If the link transmission information indicates that the network device corresponds to a low-latency target link, the negotiation module determines that the working mode of the network device includes disabling an error correction encoding and decoding function. Then, the negotiation module sends a disabling instruction to the error correction encoding and decoding module, where the disabling instruction instructs to disable the error correction encoding and decoding function. The error correction encoding and decoding module receives the disabling instruction, and disables the error correction encoding and decoding function based on the disabling instruction.

In this application, when the network device is applied to a scenario with a low-latency requirement, the error correction encoding and decoding function is disabled, to reduce a latency, so that the requirement of the scenario is met.

A second aspect of this application provides a communication system, including a first network device and N second network devices. The first network device is a master device in the communication system, the N second network devices are slave devices in the communication system, and N is a positive integer.

The first network device is configured to adjust at least one of a bus scale, a channel capacity, or a power supply or receiving state, where the bus scale includes at least one of a quantity of devices accessing a bus and a link length, the channel capacity includes a bandwidth, and the power supply or receiving state includes at least one of sequential power-on, power-on of a new node, or power-off of a faulty node. The first network device connects paths between the first network device and M second network devices in the N second network devices in a same time period, to enable the first network device to establish communication connections to the M second network devices, and reduce a quantity of devices accessing the bus in the same time period, where M is a positive integer less than N.

In a possible implementation of the second aspect, the first network device is further configured to allocate a spectrum resource transmitted on the bus.

In a possible implementation of the second aspect, the first network device is further configured to: obtain a topology type of a target link, where the topology type includes a point-to-point topology or a point-to-multipoint topology; and determine a working mode of the first network device based on the topology type.

In a possible implementation of the second aspect, the first network device is specifically configured to: if it is determined that the topology type is the point-to-point topology, determine that the working mode includes enabling an echo cancellation function.

In a possible implementation of the second aspect, the first network device is specifically configured to: if the topology type is the point-to-multipoint topology, determine that the working mode includes a modulation scheme of multi-carrier modulation; or if the topology type is the point-to-point topology, determine that the working mode includes a modulation scheme of single-carrier modulation.

In a possible implementation of the second aspect, the first network device is specifically configured to determine the working mode of the network device based on link transmission information and the topology type.

In a possible implementation of the second aspect, the link transmission information includes a signal transmission feature, and the first network device is specifically configured to: if the signal transmission feature indicates that a frequency band in which the first network device sends a first signal to the second network device overlaps a frequency band in which the first network device receives a second signal from the second network device, and the topology type is the point-to-multipoint topology, determine that the working mode includes that a first time period corresponding to the first signal does not intersect with a second time period corresponding to the second signal.

In a possible implementation of the second aspect, the link transmission information includes a signal transmission feature, and the first network device is specifically configured to: if the signal transmission feature indicates that a time period in which the first network device sends a first signal to the second network device overlaps a time period in which the first network device receives a second signal from the second network device, and the topology type is the point-to-multipoint topology, determine that the working mode includes that a first frequency band corresponding to the first signal does not intersect with a second frequency band corresponding to the second signal.

In a possible implementation of the second aspect, the first network device is further configured to: obtain link transmission information; and if the link transmission information indicates that the first network device corresponds to a low-latency target link, determine that a working mode of the first network device includes disabling an error correction encoding and decoding function.

The first network device may be further configured to perform the operations according to any one of the first aspect and the implementations of the first aspect. Details are not described herein again.

A third aspect of this application provides a device communication method. The method is applied to a network device, and the method includes:
adjusting at least one of a bus scale, a channel capacity, or a power supply or receiving state, where the bus scale includes at least one of a quantity of devices accessing a bus and a link length, the channel capacity includes a bandwidth, and the power supply or receiving state includes at least one of sequential power-on, power-on of a new node, or power-off of a faulty node.

In a possible implementation of the third aspect, a manner in which the network device can adjust the bus scale includes: reducing a quantity of devices accessing the bus in a same time period.

In a possible implementation of the third aspect, a manner in which the network device reduces the quantity of devices accessing the bus in the same time period includes: connecting paths between the network device and a part of devices in the same time period, to reduce the quantity of devices accessing the bus in the same time period.

In a possible implementation of the third aspect, the network device may further allocate a spectrum resource transmitted on the bus.

In a possible implementation of the third aspect, the network device allocates, by allocating different frequency band resources or a same frequency band resource to different services, the spectrum resource transmitted on the bus.

In a possible implementation of the third aspect, the network device may further obtain a topology type of a target link, where the topology type includes a point-to-point topology or a point-to-multipoint topology, and the target link includes at least two network devices; and determine a working mode of the network device based on the topology type.

In a possible implementation of the third aspect, when the topology type of the target link is the point-to-point topology, the network device can determine that the working mode of the network device includes enabling an echo cancellation function.

In a possible implementation of the third aspect, if the topology type of the target link is the point-to-multipoint topology, the network device determines that the working mode includes a modulation scheme of multi-carrier modulation. If the topology type of the target link is the point-to-point topology, the network device determines that the working mode includes a modulation scheme of single-carrier modulation.

In a possible implementation of the third aspect, the network device can further obtain link transmission information of the target link, and determine the working mode of the network device based on the link transmission information and the topology type.

In a possible implementation of the third aspect, the network device is a first network device, and the link transmission information includes a signal transmission feature. If the signal transmission feature indicates that a frequency band in which the first network device sends a first signal to a second network device overlaps a frequency band in which the first network device receives a second signal from the second network device, and the topology type is the point-to-multipoint topology, the network device determines that the working mode includes that a first time period corresponding to the first signal does not intersect with a second time period corresponding to the second signal.

In a possible implementation of the third aspect, the network device is a first network device, and the link transmission information includes a signal transmission feature. If the signal transmission feature indicates that a time period in which the first network device sends a first signal to a second network device overlaps a time period in which the first network device receives a second signal from the second network device, and the topology type is the point-to-multipoint topology, the network device determines that the working mode includes that a first frequency band corresponding to the first signal does not intersect with a second frequency band corresponding to the second signal.

In a possible implementation of the third aspect, the network device further obtains link transmission information. If the link transmission information indicates that the network device corresponds to a low-latency target link, the network device determines that a working mode of the network device includes disabling an error correction encoding and decoding function.

The network device shown in the third aspect of this application can perform the operations according to any one of the first aspect and the implementations of the first aspect. Details are not described herein again.

A fourth aspect of this application provides a network device, including a processor and a memory. The memory is configured to store computer instructions, and the processor is configured to invoke the computer instructions, so that the network device performs the device communication method according to any one of the third aspect and the implementations of the third aspect, to implement the function of the network device in any one of the first aspect and the implementations of the first aspect. Details are not described herein again.

A fifth aspect of this application provides a computer-readable storage medium. The computer-readable storage medium stores a program. When executing the program, a computer performs the device communication method according to any one of the third aspect and the implementations of the third aspect, to implement the function of the network device in any one of the first aspect and the implementations of the first aspect. Details are not described herein again.

A sixth aspect of this application provides a computer program product. When the computer program product is executed on a computer, the computer performs the device communication method according to any one of the third aspect and the implementations of the third aspect, to implement the function of the network device in any one of the first aspect and the implementations of the first aspect. Details are not described herein again.

Beneficial effects shown in the second aspect to the sixth aspect of this application are similar to those in the first aspect. Details are not described herein again.

### BRIEF DESCRIPTION OF DRAWINGS

FIG. 1 is a diagram of a system architecture according to an embodiment of this application;
FIG. 2 is a diagram of another system architecture according to an embodiment of this application;
FIG. 3 is a diagram of a structure of a network device according to an embodiment of this application;
FIG. 4 is a diagram of another structure of a network device according to an embodiment of this application;
FIG. 5 is a diagram of another structure of a network device according to an embodiment of this application; and
FIG. 6 is a diagram of another structure of a network device according to an embodiment of this application.

### DESCRIPTION OF EMBODIMENTS

This application provides a network device, a device communication method, and a communication system. A bus management module is disposed in the network device, and the network device can be adjusted in a plurality of dimensions, so that the network device meets requirements of different scenarios. Therefore, an adaptive capability of the network device is improved, and communication quality of the network device in the different scenarios is maintained at a good level.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include" and "have" and any other variants are intended to cover a non-exclusive inclusion, so that a process, method, system, product, or device that includes a series of units is not necessarily limited to those units, but may include other units not expressly listed or inherent to the process, method, product, or device. In addition, "at least one" means one or more, and "a plurality of" means two or more. "And/or" describes an association relationship of associated objects and represents that three relationships may exist. For example, A and/or B may represent the following cases: Only A exists, both A and B exist, and only B exists, where A and B may be in a singular form or a plural form. The character "/" generally indicates an "or" relationship between the associated objects. "At least one of the following items (pieces)" or a similar expression thereof indicates any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

First, proper nouns and related concepts that may be used in embodiments of this application are described.

### 1. Internet of things

The internet of things is an indispensable part of a next-generation information technology, and may also be referred to as ubiquitous interconnection, which means that things are connected. The internet of things is an internet in which things are connected. In other words, a core of the internet of things is still the internet. On a basis of the internet, the internet of things extends a scope of a user end to any object. In general, the internet of things implements information exchange and communication between any objects by using various sensing devices. The sensing devices include a radio frequency identification device, an infrared sensor, a laser scanner, and the like. This is not specifically limited herein.

### 2. Single-pair technology

The single-pair technology is widely used in an existing internet of things scenario, and is, for example, an RS485 technology often used in a campus scenario such as a building or firefighting automation, and an industrial scenario such as a smart meter or an onsite network. A digital subscriber line (digital subscriber line, DSL) and power line carrier communication (power line communication, PLC) in a family access scenario, a controller area network (controller area network, CAN) in vehicle-mounted and industrial control scenarios, and the like all belong to a single-pair communication technology. In general, the single-pair technology plays an important role in the internet of things scenario.

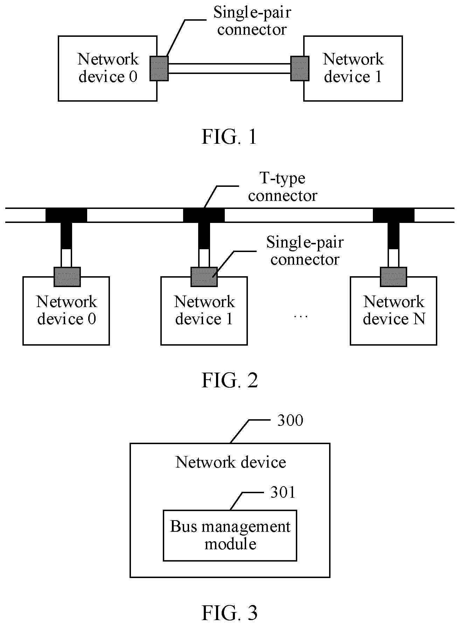

Next, FIG. 1 and FIG. 2 each are a diagram of a system architecture according to an embodiment of this application.

As shown in FIG. 1, a communication connection is established between a network device 0 and a network device 1 through a single pair, to form a point-to-point topology. In the point-to-point topology, role assignment may be further performed on the network device 0 and the network device 1, to determine a master device and a slave device.

Different from FIG. 1, in the embodiment shown in FIG. 2, a point-to-multipoint topology is formed between a network device 0 and a network device N. A connection structure formed by the network devices shown in FIG. 2 may be referred to as a trunk+stub (trunk+stub) structure. In this structure, each network device is connected to a stub with a specific length by using a connector, and then is connected to a bus by using a T-type connector. Two ends of the bus may each be connected to a matching resistor, or may each be connected to a network device. In addition, there may be another connection manner. For example, the two ends are connected to the same network device, so that a ring bus link is formed. This is not specifically limited herein. In the point-to-multipoint topology, all the network devices are actually connected through one bus. To avoid a bus conflict, a master device performs resource scheduling and allocation for each slave device.

In this application, the network device may be located in the point-to-point topology, or may be located in the point-to-multipoint topology. Therefore, the bus in embodiments of this application has a plurality of meanings. In the point-to-point topology, the bus is a cable used by the network device for communication. In the point-to-multipoint topology, the bus has the same meaning as a conventional bus, and corresponds to the trunk in the embodiment shown in FIG. 2.

It should be noted that, in the embodiments shown in FIG. 1 and FIG. 2, a single pair Ethernet (single pair Ethernet, SPE) is used as an example. To be specific, in the embodiments shown in FIG. 1 and FIG. 2, the network devices are in the Ethernet, and the network devices are connected through a single pair. During actual application, the network devices may be connected in another manner. For example, the network devices may be connected through four pairs. This is not specifically limited herein.

It should be noted that, in embodiments of this application, a type of the network device, a transmission medium between the network devices, and an application scenario of the network device are not limited. There are a plurality of possible types of the network devices. The network device may be a sensor, or may be a switch, or may be another network device, for example, a controller. In addition, types of network devices in a same communication system may be the same or may be different. This is not specifically limited herein. There are a plurality of possible transmission media. The transmission medium may be a twisted pair or a parallel line. In addition, the transmission medium may be another type of transmission medium, for example, a power line. There are also a plurality of possible application scenarios, including a campus scenario, an industrial scenario, a vehicle-mounted scenario, a firefighting automation scenario, and the like. This is not specifically limited herein. The following uses a single pair Ethernet scenario as an example for description.

FIG. 3 is a diagram of a structure of a network device according to an embodiment of this application.

As shown in FIG. 3, the network device 300 includes a bus management module 301. The bus management module 301 is configured to adjust at least one of a bus scale, a channel capacity, or a power supply or receiving state.

The bus scale is a bus scale of a communication system in which the network device is located, and includes at least one of a quantity of devices accessing a bus and a link length in the communication system. The channel capacity includes a bandwidth. The power supply or receiving state includes at least one of sequential power-on, power-on of a new node, or power-off of a faulty node. Sequential power-on includes: when no slave device in the communication system is powered on, sequentially supplying power to a slave device that needs to be powered on online. Power-on of the new node is: when there is a slave device that is powered on in the communication system, powering on a slave device that is not powered on. Power-off of the faulty node is powering off a faulty node in the communication system, so that a faulty device is isolated from another device, to avoid impact on the another device in the communication system.

In this application, the network device can be adjusted in a plurality of dimensions via the bus management module, so that the network device meets requirements of different scenarios. Therefore, an adaptive capability of the network device is improved, and communication quality of the network device in the different scenarios is maintained at a good level.

In some optional implementations, the bus management module adjusts the bus scale and/or the channel capacity by reducing a quantity of devices accessing the bus in a same time period. The time period is a period of time. When a transmission rate is about 10 Mbps, duration of connecting one slave device to the bus and transmitting a frame of data is less than a millisecond. For example, it is assumed that an initial point-to-multipoint topology includes one master device and nine slave devices. The master device may reduce, based on a requirement of an application scenario, a quantity of slave devices accessing the bus in the same time period. When another parameter remains unchanged, the bus scale is reduced and the current channel capacity is increased, so that a bus transmission capability is improved.

In some optional implementations, that the bus management module reduces the quantity of devices accessing the bus in the same time period may be as follows: In a scenario of the point-to-multipoint topology, in the same time period, the network device connects only paths between the network device and a part of slave devices. There may be one or more slave devices. This is not specifically limited herein.

For example, it is assumed that the initial point-to-multipoint topology includes one network device serving as a master device and nine slave devices. In different time periods, the master device connects only a path between the master device and one slave device, so that in each time period, the master device communicates only with one slave device. In other words, the initial point-to-multipoint topology is converted into a time-period-based point-to-point topology. Optionally, in different time periods, the master device may alternatively connect paths between the master device and a plurality of slave devices in the nine slave devices. A quantity of the plurality of slave devices is greater than 1 and less than 9. Although a topology type obtained through the connecting is still the point-to-multipoint topology, an adjusted scale of the point-to-multipoint topology is different from a scale of the initial point-to-multipoint topology. In addition, the adjustment may alternatively be performed in another manner. For example, the master device connects a path between the master device and one slave device in a first time period, and connects paths between the master device and the plurality of slave devices in a next time period of the first time period. The adjustment is performed continuously in such a sequence. Overall, point-to-point topology+point-to-multipoint topology is formed.

In this application, the bus management module can reduce, in a manner of connecting the paths between the network device and the part of slave devices, the quantity of devices accessing the bus in the same time period, so that the technical solutions of this application are implementable, and practicability of the technical solutions is improved.

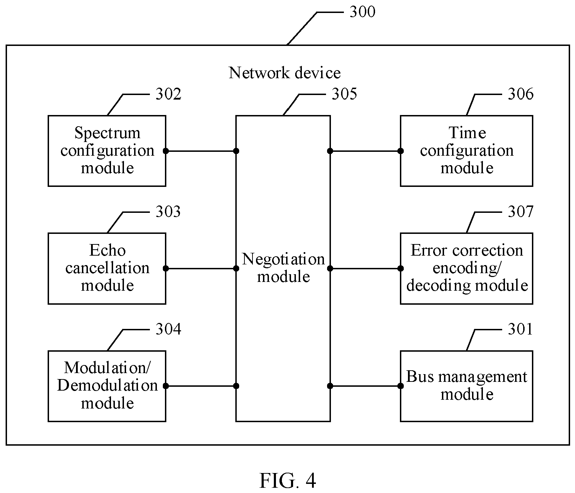

Next, FIG. 4 is a diagram of a structure of a network device according to an embodiment of this application.

As shown in FIG. 4, in some optional implementations, the network device 300 further includes a spectrum configuration module 302. The spectrum configuration module 302 is configured to allocate a spectrum resource transmitted on a bus.

In some optional implementations, that the spectrum configuration module 302 allocates the spectrum resource transmitted on the bus may be allocating different frequency band resources to different services, so that a plurality of different services are carried in different frequency bands for transmission on a single pair at a same moment, and the plurality of services are simultaneously performed. Alternatively, a same frequency band may be allocated to different services, so that the different services are carried out in different time periods based on the same frequency band resource.

In this application, the spectrum resource transmitted on the bus is managed based on the spectrum configuration module, so that requirements of different scenarios are further met, and a basis for implementing service association is also provided.

As shown in FIG. 4, in some optional implementations, the network device 300 further includes a negotiation module 305. The negotiation module 305 can obtain a topology type of a target link, where the topology type includes a point-to-point topology or a point-to-multipoint topology. The target link is a target link in a communication system in which the network device is located, and includes at least two network devices. The negotiation module 305 further determines a working mode of the network device based on the topology type. Then, the negotiation module 305 sets, through cooperation of another module, the network device to the working mode determined by the negotiation module.

In this application, the negotiation module determines, based on the topology type of the target link in which the network device is located, the working mode that adapts to the topology type, so that the working mode of the network device meets a requirement of an actual application scenario.

As shown in FIG. 4, in some optional implementations, the network device 300 further includes an echo cancellation module 303. Whether the network device 300 enables an echo cancellation function can be determined through collaboration between the negotiation module 305 and the echo cancellation module 303. Specifically, when determining that the topology type of the target link is the point-to-point topology, the negotiation module 305 can determine that the working mode of the network device includes enabling the echo cancellation function. Then, the negotiation module 305 sends an enabling instruction to the echo cancellation module 303, where the enabling instruction instructs to enable the echo cancellation function. The echo cancellation module 303 receives the enabling instruction from the negotiation module 305, and enables the echo cancellation function based on the enabling instruction. The enabling the echo cancellation function not only includes enabling a disabled echo cancellation function, but also includes maintaining an enabled state of the echo cancellation function. This is not specifically limited herein.

In this application, when the topology type of the target link is the point-to-point topology, the echo cancellation function is enabled through collaboration between the negotiation module and the echo cancellation module, so that the network device works in a full-duplex mode and is not interfered by an echo, to ensure normal communication between the devices.

As shown in FIG. 4, in some optional implementations, the network device 300 further includes a modulation/demodulation module 304. The modulation/demodulation module may also be referred to as a modulation and demodulation module. This is not specifically limited herein. The modulation/demodulation module 304 is configured to set a modulation scheme and/or a demodulation scheme of the network device 300.

Specifically, when the negotiation module 305 determines that the topology type of the target link is the point-to-multipoint topology, the negotiation module 305 determines that the working mode of the network device includes a modulation scheme of multi-carrier modulation, and sends first modulation information to the modulation/demodulation module 304, where the first modulation information indicates the multi-carrier modulation. In the point-to-multipoint topology, a quantity of nodes is large, and signal reflection or multipath interference in the link is severe. Therefore, the multi-carrier modulation is suitable. During multi-carrier modulation, a plurality of carrier signals are used to divide a data stream into several sub-data streams, so that the sub-data stream has a much lower transmission bit rate. The sub-data streams are used to modulate several carriers. The multi-carrier modulation may be implemented in a plurality of manners, for example, discrete multi-tone (discrete multi-tone, DMT) modulation and orthogonal frequency division multiplexing (orthogonal frequency division multiplexing, OFDM). This is not specifically limited herein. The modulation/demodulation module 304 receives the first modulation information from the negotiation module 305, and sets the modulation scheme of the network device to the multi-carrier modulation based on the first modulation information.

When the negotiation module 305 determines that the topology type of the target link is the point-to-point topology, the negotiation module 305 determines that the working mode of the network device includes a modulation scheme of single-carrier modulation, and sends second modulation information to the modulation/demodulation module 304, where the second modulation information indicates the single-carrier modulation. In the point-to-point topology, a quantity of nodes is small, and signal reflection or multipath interference in the link is not severe. Therefore, the single-carrier modulation can be used to ensure communication quality. The single-carrier modulation is a modulation technology in which only one carrier is used in a fixed frequency band. The single-carrier modulation may be implemented in a plurality of manners, for example, pulse amplitude modulation (pulse amplitude modulation, PAM) and differential Manchester encoding (differential Manchester encoding, DME). This is not specifically limited herein. The modulation/demodulation module 304 receives the second modulation information from the negotiation module 305, and sets the modulation scheme of the network device to the single-carrier modulation based on the second modulation information. In addition, it may be understood that, because the demodulation scheme corresponds to the modulation scheme, when the modulation scheme is determined, the corresponding demodulation scheme is also actually determined.

In this application, the negotiation module can determine different modulation and demodulation schemes based on different topology types, to better meet requirements of corresponding scenarios, and improve flexibility and practicability of the technical solutions.

In some optional implementations, in addition to determining the working mode of the network device based on the topology type of the target link, the negotiation module 305 included in the network device 300 may further obtain link transmission information of the target link, and determine the working mode of the network device with reference to the topology type of the target link and the link transmission information. Then, the negotiation module 305 sets, through cooperation of another module, the network device to the working mode determined by the negotiation module.

In this application, in addition to directly determining the working mode of the network device based on the topology type, the negotiation module may further determine, based on the topology type of the target link in which the network device is located and the link transmission information, the working mode that adapts to the topology type and the link transmission information. The negotiation module can determine the working mode of the network device from a plurality of dimensions, so that the working mode of the network device meets a requirement of an actual application scenario.

As shown in FIG. 4, in some optional implementations, the network device 300 is a first network device, and further includes a time configuration module 306. The link transmission information includes a signal transmission feature, and the signal transmission feature includes information about a frequency band in which a second network device sends a second signal to the first network device. A time period in which the network device 300 sends a signal to the second network device can be determined through collaboration between the negotiation module 305 and the time configuration module 306.

Specifically, when determining that the signal transmission feature indicates that a frequency band in which the first network device sends a first signal to the second network device overlaps a frequency band in which the first network device receives the second signal from the second network device, and the topology type is the point-to-multipoint topology, the negotiation module 305 can determine that the working mode of the first network device includes that a first time period corresponding to the first signal does not intersect with a second time period corresponding to the second signal. The first time period includes a time period in which the first network device sends the first signal, and the second time period includes a time period in which the second network device sends the second signal. After determining the working mode, the negotiation module 305 sends time period configuration information to the time configuration module 306, where the time period configuration information indicates that the first time period does not intersect with the second time period. The time configuration module 306 receives the time period configuration information from the negotiation module 305, and sets, based on the time period configuration information, the first time period in which the first network device sends the first signal to the second network device, to enable the first time period not to intersect with the second time period. In general, when the frequency bands overlap, the time periods in which the network device 300 communicates the signals with the second network device do not intersect with, in other words, communication is performed when the frequency bands are the same and the time periods are different.

In this application, when the frequency band in which the second network device sends the second signal to the first network device overlaps the frequency band in which the first network device sends the first signal to the second network device, the negotiation module collaborates with the time configuration module to set the first time period in which the first network device sends the first signal to the second network device not to intersect with the second time period in which the second network device sends the second signal to the first network device. Therefore, normal communication between the first network device and the second network device is ensured, and the first network device and the second network device can identify the signals from each other, so that the technical solutions of this application are implementable.

As shown in FIG. 4, in some optional implementations, the network device 300 is a first network device, and further includes the spectrum configuration module 302. The link transmission information includes a signal transmission feature, and the signal transmission feature includes information about a time period in which a second network device sends a second signal to the first network device. A frequency band in which the network device 300 sends a signal to the second network device can be determined through collaboration between the negotiation module 305 and the spectrum configuration module 302.

Specifically, when determining that the signal transmission feature indicates that a time period in which the first network device sends a first signal to the second network device overlaps a time period in which the first network device receives the second signal from the second network device, and the topology type is the point-to-multipoint topology, the negotiation module 305 can determine that the working mode of the first network device includes that a first frequency band corresponding to the first signal does not intersect with a second frequency band corresponding to the second signal. Then, the negotiation module 305 sends frequency band configuration information to the spectrum configuration module 302, where the frequency band configuration information indicates that the first frequency band does not intersect with the second frequency band. The spectrum configuration module 302 receives the frequency band configuration information from the negotiation module 305, and sets, based on the frequency band configuration information, the first frequency band in which the first network device sends the first signal to the second network device, to enable the first frequency band not to intersect with the second frequency band, in other words, communication is performed when the time periods are the same and the frequency bands are different.

In this application, when the time period in which the second network device sends the second signal to the first network device overlaps the time period in which the first network device sends the first signal to the second network device, the negotiation module collaborates with the time configuration module to set the first frequency band in which the first network device sends the first signal to the second network device not to intersect with the second frequency band in which the second network device sends the second signal to the first network device. Therefore, normal communication between the first network device and the second network device is ensured, and the first network device and the second network device can identify the signals from each other, so that the technical solutions of this application are implementable. In addition, regardless of whether time period overlapping or frequency band overlapping occurs on the first signal and the second signal, the technical solutions of this application have corresponding solutions. Practicability of the technical solutions of this application is further improved.

As shown in FIG. 4, in some optional implementations, the network device 300 further includes a negotiation module 305 and an error correction encoding/decoding module 307. The error correction encoding/decoding module may also be referred to as an error correction encoding and decoding module. This is not specifically limited herein. Whether the network device 300 enables an error correction encoding and decoding function can be determined through collaboration between the negotiation module 305 and the error correction encoding/decoding module 307.

Specifically, the negotiation module 305 can obtain link transmission information. When the link transmission information indicates that the target link corresponding to the network device 300 is a low-latency link, the negotiation module 305 determines that the working mode of the network device 300 includes disabling the error correction encoding and decoding function. A manner in which the negotiation module 305 obtains the link transmission information may be receiving a latency requirement input by a user. Then, the negotiation module 305 sends a disabling instruction to the error correction encoding/decoding module 307, where the disabling instruction instructs to disable the error correction encoding and decoding function. The error correction encoding/decoding module 307 receives the disabling instruction from the negotiation module 305, and disables the error correction encoding and decoding function based on the disabling instruction. The disabling the error correction encoding and decoding function not only includes disabling an enabled error correction encoding and decoding function, but also includes maintaining a disabled state of the error correction encoding and decoding function. This is not specifically limited herein.

It may be understood that, in different scenarios, a low latency corresponds to different indicator requirements. For example, in a motor scenario, when a transmission distance is 100 meters to 200 meters, and a transmission rate is 100 Mbps, a latency at a physical layer is 1 microsecond to 2 microseconds, and may be considered as a low latency.

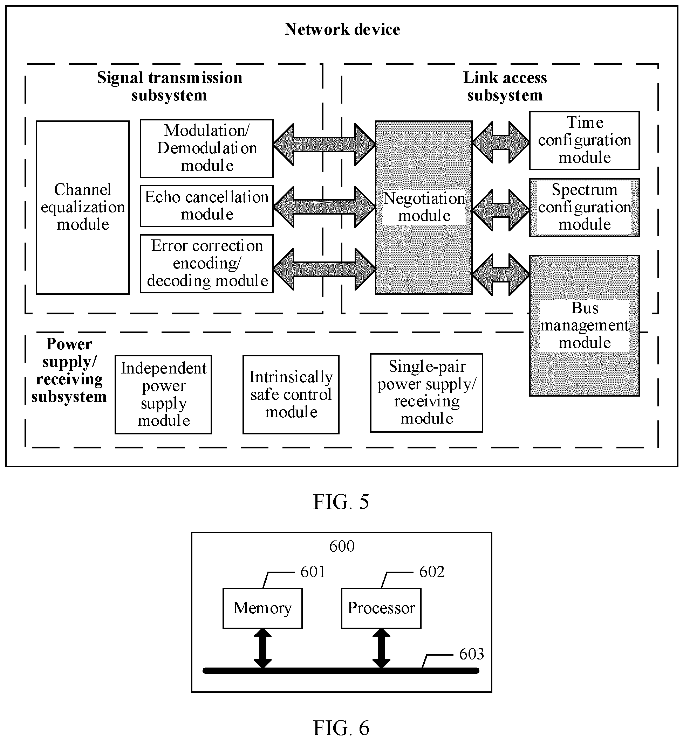

In this application, the foregoing modules may be divided into different subsystems based on different functions, to obtain a network device shown in FIG. 5. FIG. 5 is a diagram of a structure of a network device according to an embodiment of this application.

As shown in FIG. 5, the network device includes a signal transmission subsystem, a link access subsystem, and a power supply/receiving subsystem.

The signal transmission subsystem is mainly configured to implement signal sending, receiving, and processing. The signal transmission subsystem includes a channel equalization module, a modulation/demodulation module, an echo cancellation module, and an error correction encoding/decoding module. When a transmission distance is short or a transmission rate is low, regardless of a point-to-point topology or a point-to-multipoint topology, the channel equalization module may disable a channel equalization function, so that complexity and power consumption of a communication system are reduced. On the contrary, when a transmission distance is long or a transmission rate is high, regardless of a point-to-point topology or a point-to-multipoint topology, a channel insertion loss causes severe distortion to a signal, and the channel equalization module enables a channel equalization function, so that reliability of a communication system is ensured. If a channel capacity required for communication still cannot be reached, a negotiation module controls the error correction encoding/decoding module to enable an error correction encoding and decoding function, to obtain an additional gain, and further achieve a sufficient signal-to-noise ratio margin.

The link access subsystem includes a time configuration module, a spectrum configuration module, the negotiation module, and a bus management module. In the point-to-multipoint topology, the time configuration module can complete allocation and scheduling of transmission slots of a plurality of network devices on a bus, to avoid a signal conflict. The negotiation module can obtain a link type and link transmission information, and determine a working mode of the network device based on the link type and/or the link transmission information. Then, the negotiation module invokes a corresponding module to set the network device to the working mode determined by the negotiation module. The spectrum configuration module can configure a same frequency band resource or different frequency band resources for different services on the bus, to achieve a service transmission mode with a plurality of effects. Specific functions of these modules are described above. Details are not described herein again. In general, the network device can adjust the working mode based on an actual application requirement through collaboration between the negotiation module and another module.

The power supply/receiving subsystem includes an independent power supply module, an intrinsically safe control module, a single-pair power supply/receiving module, and the bus management module. When a power supply manner or a power receiving manner of the network device is an external power receiving manner, the independent power supply module provides a local power supply for the network device. The intrinsically safe control module is an optional module. In a special application scenario such as a flammable scenario or an explosive scenario that has an intrinsically safe requirement, the intrinsically safe control module may be configured to limit a power supply voltage, current, power, and the like of a single-pair port based on a requirement. When the network device receives power from a single pair or supplies power to another network device through the single pair, the single-pair power supply/receiving module may complete physical coupling and decoupling of a voltage and data.

It should be noted that, when the bus management module is configured to adjust a bus scale or the channel capacity, it is considered that the bus management module belongs to the link access subsystem. When the bus management module is configured to adjust a power supply or receiving state, it is considered that the bus management module belongs to the power supply/receiving subsystem.

An embodiment of this application further provides a communication system. The communication system includes a first network device and N second network devices. The first network device is a master device in the communication system, the N second network devices are slave devices in the communication system, and N is a positive integer. For example, as shown in FIG. 2, it is assumed that the first network device is the network device 0, and the second network devices are the network device 1 to the network device N.

The first network device is configured to adjust at least one of a bus scale, a channel capacity, or a power supply or receiving state, where the bus scale includes at least one of a quantity of devices accessing a bus and a link length, the channel capacity includes a bandwidth, and the power supply or receiving state includes at least one of sequential power-on, power-on of a new node, or power-off of a faulty node. The first network device connects paths between the first network device and M second network devices in the N second network devices in a same time period, to enable the first network device to establish communication connections to the M second network devices, and reduce a quantity of devices accessing the bus in the same time period, where M is a positive integer less than N.

In some optional implementations, the first network device is further configured to allocate a spectrum resource transmitted on the bus. The allocating the spectrum resource transmitted on the bus includes allocating a same frequency band resource or different frequency band resources to different services. Specifically, when a time period in which the second network device sends a signal to the first network device overlaps a time period in which the first network device sends a signal to the second network device, the first network device allocates different frequency band resources to the first network device and the second network device, to avoid a resource conflict. When a time period in which the second network device sends a signal to the first network device does not intersect with a time period in which the first network device sends a signal to the second network device, the first network device allocates the same frequency band resource or different frequency band resources to the first network device and the second network device.

In some optional implementations, the first network device is further configured to: obtain a topology type of a target link, where the topology type includes a point-to-point topology or a point-to-multipoint topology; and determine a working mode of the first network device based on the topology type.

In some optional implementations, if the first network device determines that the topology type is the point-to-point topology, to avoid interference caused by an echo of device communication, the first network device determines that the working mode of the first network device includes enabling an echo cancellation function. In addition, the first network device may further send indication information to the second network device, to indicate the second network device to enable the echo cancellation function. Alternatively, the second network device may use a manner similar to that of the first network device, and enable the echo cancellation function when identifying that the topology type is the point-to-point topology. The enabling the echo cancellation function includes enabling a disabled echo cancellation function, and also includes maintaining an enabled state of the echo cancellation function. This is not specifically limited herein.

In some optional implementations, when the topology type is the point-to-multipoint topology, the first network device determines that the working mode includes a modulation scheme of multi-carrier modulation. When the topology type is the point-to-point topology, the first network device determines that the working mode includes a modulation scheme of single-carrier modulation.

In some optional implementations, the first network device may further determine the working mode of the network device based on link transmission information and the topology type.

In some optional implementations, the link transmission information includes a signal transmission feature. When the signal transmission feature indicates that a frequency band in which the first network device sends a first signal to the second network device overlaps a frequency band in which the first network device receives a second signal from the second network device, and the topology type is the point-to-multipoint topology, the first network device determines that the working mode of the first network device includes that a first time period corresponding to the first signal does not intersect with a second time period corresponding to the second signal, to achieve a transmission effect when the frequency bands are the same and the time periods are different, and avoid a conflict.

In some optional implementations, the link transmission information includes a signal transmission feature. When the signal transmission feature indicates that a time period in which the first network device sends a first signal to the second network device overlaps a time period in which the first network device receives a second signal from the second network device, and the topology type is the point-to-multipoint topology, the first network device determines that the working mode of the first network device includes that a first frequency band corresponding to the first signal does not intersect with a second frequency band corresponding to the second signal, to achieve a transmission effect when the time periods are the same and the frequency bands are different or a plurality of different services are carried in different frequency bands for transmission on a single pair.

In some optional implementations, the first network device may further obtain link transmission information. When the link transmission information indicates that the first network device corresponds to a low-latency target link, the first network device determines that the working mode of the first network device includes disabling an error correction encoding and decoding function.

In some optional implementations, the first network device may further perform the operations performed by the network device in the embodiments shown in FIG. 3 to FIG. 5. Details are not described herein again.

An embodiment of this application further provides a device communication method. The device communication method is applied to a network device, and the method includes: adjusting at least one of a bus scale, a channel capacity, or a power supply or receiving state, where the bus scale includes at least one of a quantity of devices accessing a bus and a link length, the channel capacity includes a bandwidth, and the power supply or receiving state includes at least one of sequential power-on, power-on of a new node, or power-off of a faulty node.

In some optional implementations, a manner in which the network device can adjust the bus scale includes: reducing a quantity of devices accessing the bus in a same time period.

In some optional implementations, a manner in which the network device reduces the quantity of devices accessing the bus in the same time period includes: connecting paths between the network device and a part of devices in the same time period, to reduce the quantity of devices accessing the bus in the same time period.

In some optional implementations, the network device may further allocate a spectrum resource transmitted on the bus.

In some optional implementations, the network device allocates, by allocating different frequency band resources or a same frequency band resource to different services, the spectrum resource transmitted on the bus.

In some optional implementations, the network device may further obtain a topology type of a target link, where the topology type includes a point-to-point topology or a point-to-multipoint topology, and the target link includes at least two network devices; and determine a working mode of the network device based on the topology type.

In some optional implementations, when the topology type of the target link is the point-to-point topology, the network device can determine that the working mode of the network device includes enabling an echo cancellation function.

In some optional implementations, if the topology type of the target link is the point-to-multipoint topology, the network device determines that the working mode includes a modulation scheme of multi-carrier modulation. If the topology type of the target link is the point-to-point topology, the network device determines that the working mode includes a modulation scheme of single-carrier modulation.

In some optional implementations, the network device can further obtain link transmission information of the target link, and determine the working mode of the network device based on the link transmission information and the topology type.

In some optional implementations, the network device is a first network device, and the link transmission information includes a signal transmission feature. If the signal transmission feature indicates that a frequency band in which the first network device sends a first signal to a second network device overlaps a frequency band in which the first network device receives a second signal from the second network device, and the topology type is the point-to-multipoint topology, the network device determines that the working mode includes that a first time period corresponding to the first signal does not intersect with a second time period corresponding to the second signal.

In some optional implementations, the network device is a first network device, and the link transmission information includes a signal transmission feature. If the signal transmission feature indicates that a time period in which the first network device sends a first signal to a second network device overlaps a time period in which the first network device receives a second signal from the second network device, and the topology type is the point-to-multipoint topology, the network device determines that the working mode includes that a first frequency band corresponding to the first signal does not intersect with a second frequency band corresponding to the second signal.

In some optional implementations, the network device further obtains link transmission information. If the link transmission information indicates that the network device corresponds to a low-latency target link, the network device determines that a working mode of the network device includes disabling an error correction encoding and decoding function.

In the device communication method provided in this embodiment of this application, the network device can perform the operations performed by the network device in the embodiments shown in FIG. 3 to FIG. 5. Details are not described herein again. Beneficial effects corresponding to the device communication method are described above. Details are not described herein again.

Next, FIG. 6 is a diagram of a structure of a network device according to an embodiment of this application.

As shown in FIG. 6, the network device 600 includes a memory 601 and a processor 602. The memory 601 and the processor 602 are connected through a bus 603. The memory 601 is configured to store computer instructions.

The processor 602 may communicate with the memory 601, so that the processor 602 invokes the computer instructions in the memory 601, to perform a series of instruction operations in the operations performed by the network device in the embodiments shown in FIG. 3 to FIG. 5.

The memory 601 may be a volatile memory or a persistent memory. The processor 602 may be a central processing unit (central processing unit, CPU), or may be a single-core processor. In addition, the processor 602 may be a processor of another type, for example, a dual-core processor. This is not specifically limited herein.

In the several embodiments provided in this application, it should be understood that the disclosed system and device may be implemented in another manner. For example, the device embodiment described above is merely an example. For example, division into the modules is merely logical function division and may be other division during actual implementation. For example, a plurality of modules or components may be combined or may be integrated into another system, or some features may be ignored or not performed. In addition, the displayed or discussed mutual coupling or direct coupling or communication connection may be implemented through some interfaces. The indirect couplings or communication connections between the devices or modules may be implemented in an electronic form, a mechanical form, or another form.

The modules described as separate parts may or may not be physically separated, and parts displayed as modules may or may not be physical modules, may be located in one location, or may be distributed on a plurality of network units. A part or all of the units may be selected based on an actual requirement to achieve the objectives of the solutions of embodiments.

In addition, the functional modules in embodiments of this application may be integrated into one processing unit, each module may exist alone physically, or two or more modules are integrated into one unit. The integrated unit may be implemented in a form of hardware, or may be implemented in a form of a software functional unit.

## Claims

1. A network device, comprising:
a bus management module, configured to adjust at least one of a bus scale, a channel capacity, or a power supply or receiving state, wherein the bus scale comprises at least one of a quantity of devices accessing a bus and a link length, the channel capacity comprises a bandwidth, and the power supply or receiving state comprises at least one of sequential power-on, power-on of a new node, or power-off of a faulty node.

2. The network device according to claim 1, wherein the bus management module is specifically configured to reduce a quantity of devices accessing the bus in a same time period.

3. The network device according to claim 2, wherein the bus management module is specifically configured to connect paths between the network device and a part of devices in the same time period, to reduce the quantity of devices accessing the bus in the same time period.

4. The network device according to any one of claims 1 to 3, wherein the network device further comprises a spectrum configuration module, configured to allocate a spectrum resource transmitted on the bus.

5. The network device according to claim 4, wherein the spectrum configuration module is specifically configured to allocate different frequency band resources or a same frequency band resource to different services.

6. The network device according to any one of claims 1 to 5, wherein the network device further comprises a negotiation module, configured to:
obtain a topology type of a target link, wherein the topology type comprises a point-to-point topology or a point-to-multipoint topology, and the target link comprises at least two network devices; and
determine a working mode of the network device based on the topology type.

7. The network device according to claim 6, wherein the network device further comprises an echo cancellation module;
the negotiation module is specifically configured to:
if it is determined that the topology type is the point-to-point topology, determine that the working mode of the network device comprises enabling an echo cancellation function; and
send an enabling instruction to the echo cancellation module, wherein the enabling instruction instructs to enable the echo cancellation function; and
the echo cancellation module is configured to:
receive the enabling instruction from the negotiation module; and
enable the echo cancellation function based on the enabling instruction.

8. The network device according to claim 6 or 7, wherein the network device further comprises a modulation and demodulation module;
the negotiation module is specifically configured to:
if the topology type is the point-to-multipoint topology, determine that the working mode comprises a modulation scheme of multi-carrier modulation; and
send first modulation information to the modulation and demodulation module, wherein the first modulation information indicates the multi-carrier modulation; or
if the topology type is the point-to-point topology, determine that the working mode comprises a modulation scheme of single-carrier modulation; and
send second modulation information to the modulation and demodulation module, wherein the second modulation information indicates the single-carrier modulation; and
the modulation and demodulation module is specifically configured to:
receive the first modulation information or the second modulation information from the negotiation module; and
set the modulation scheme of the network device to the multi-carrier modulation based on the first modulation information; or
set the modulation scheme of the network device to the single-carrier modulation based on the second modulation information.

9. The network device according to any one of claims 6 to 8, wherein the negotiation module is further configured to obtain link transmission information of the target link; and
the negotiation module is specifically configured to determine the working mode of the network device based on the link transmission information and the topology type.

10. The network device according to claim 9, wherein the network device is a first network device, the first network device further comprises a time configuration module, and the link transmission information comprises a signal transmission feature;
the negotiation module is specifically configured to:
if the signal transmission feature indicates that a frequency band in which the first network device sends a first signal to a second network device overlaps a frequency band in which the first network device receives a second signal from the second network device, and the topology type is the point-to-multipoint topology, determine that the working mode comprises that a first time period corresponding to the first signal does not intersect with a second time period corresponding to the second signal; and
send time period configuration information to the time configuration module, wherein the time period configuration information indicates that the first time period does not intersect with the second time period; and
the time configuration module is configured to:
receive the time period configuration information from the negotiation module; and
set, based on the time period configuration information, the first time period in which the first network device sends the first signal to the second network device, to enable the first time period not to intersect with the second time period.

11. The network device according to claim 9, wherein the network device is a first network device, the first network device further comprises the spectrum configuration module, and the link transmission information comprises a signal transmission feature;
the negotiation module is specifically configured to:
if the signal transmission feature indicates that a time period in which the first network device sends a first signal to a second network device overlaps a time period in which the first network device receives a second signal from the second network device, and the topology type is the point-to-multipoint topology, determine that the working mode comprises that a first frequency band corresponding to the first signal does not intersect with a second frequency band corresponding to the second signal; and
send frequency band configuration information to the spectrum configuration module, wherein the frequency band configuration information indicates that the first frequency band does not intersect with the second frequency band; and
the spectrum configuration module is configured to:
receive the frequency band configuration information from the negotiation module; and
set, based on the frequency band configuration information, the first frequency band in which the first network device sends the first signal to the second network device, to enable the first frequency band not to intersect with the second frequency band.

12. The network device according to any one of claims 1 to 5, wherein the network device further comprises a negotiation module and an error correction encoding and decoding module;
the negotiation module is configured to:
obtain link transmission information;
if the link transmission information indicates that the network device corresponds to a low-latency target link, determine that a working mode of the network device comprises disabling an error correction encoding and decoding function; and
send a disabling instruction to the error correction encoding and decoding module, wherein the disabling instruction instructs to disable the error correction encoding and decoding function; and
the error correction encoding and decoding module is configured to:
receive the disabling instruction from the negotiation module; and
disable the error correction encoding and decoding function based on the disabling instruction.

13. A communication system, comprising a first network device and N second network devices, wherein the first network device is a master device in the communication system, the N second network devices are slave devices in the communication system, and N is a positive integer;
the first network device is configured to adjust at least one of a bus scale, a channel capacity, or a power supply or receiving state, wherein the bus scale comprises at least one of a quantity of devices accessing a bus and a link length, the channel capacity comprises a bandwidth, and the power supply or receiving state comprises at least one of sequential power-on, power-on of a new node, or power-off of a faulty node; and
the first network device connects paths between the first network device and M second network devices in the N second network devices in a same time period, to enable the first network device to establish communication connections to the M second network devices, and reduce a quantity of devices accessing the bus in the same time period, wherein M is a positive integer less than N.

14. The communication system according to claim 13, wherein the first network device is further configured to allocate a spectrum resource transmitted on the bus.

15. The communication system according to claim 13 or 14, wherein the first network device is further configured to:
obtain a topology type of a target link, wherein the topology type comprises a point-to-point topology or a point-to-multipoint topology; and
determine a working mode of the first network device based on the topology type.

16. The communication system according to claim 15, wherein the first network device is specifically configured to:
if it is determined that the topology type is the point-to-point topology, determine that the working mode comprises enabling an echo cancellation function.

17. The communication system according to claim 15 or 16, wherein the first network device is specifically configured to:
if the topology type is the point-to-multipoint topology, determine that the working mode comprises a modulation scheme of multi-carrier modulation; or
if the topology type is the point-to-point topology, determine that the working mode comprises a modulation scheme of single-carrier modulation.

18. The communication system according to any one of claims 15 to 17, wherein the first network device is specifically configured to determine the working mode of the network device based on link transmission information and the topology type.

19. The communication system according to claim 18, wherein the link transmission information comprises a signal transmission feature, and the first network device is specifically configured to:
if the signal transmission feature indicates that a frequency band in which the first network device sends a first signal to the second network device overlaps a frequency band in which the first network device receives a second signal from the second network device, and the topology type is the point-to-multipoint topology, determine that the working mode comprises that a first time period corresponding to the first signal does not intersect with a second time period corresponding to the second signal.

20. The communication system according to claim 18, wherein the link transmission information comprises a signal transmission feature, and the first network device is specifically configured to:
if the signal transmission feature indicates that a time period in which the first network device sends a first signal to the second network device overlaps a time period in which the first network device receives a second signal from the second network device, and the topology type is the point-to-multipoint topology, determine that the working mode comprises that a first frequency band corresponding to the first signal does not intersect with a second frequency band corresponding to the second signal.

21. The communication system according to claim 13 or 14, wherein the first network device is further configured to:
obtain link transmission information; and
if the link transmission information indicates that the first network device corresponds to a low-latency target link, determine that a working mode of the first network device comprises disabling an error correction encoding and decoding function.

22. A device communication method, wherein the method is applied to a network device, and the method comprises:
adjusting at least one of a bus scale, a channel capacity, or a power supply or receiving state, wherein the bus scale comprises at least one of a quantity of devices accessing a bus and a link length, the channel capacity comprises a bandwidth, and the power supply or receiving state comprises at least one of sequential power-on, power-on of a new node, or power-off of a faulty node.

23. The method according to claim 22, wherein the adjusting a bus scale comprises:
reducing a quantity of devices accessing the bus in a same time period.

24. The method according to claim 23, wherein the reducing a quantity of devices accessing the bus in a same time period comprises:
connecting paths between the network device and a part of devices in the same time period, to reduce the quantity of devices accessing the bus in the same time period.

25. The method according to any one of claims 22 to 24, wherein the method further comprises:
allocating a spectrum resource transmitted on the bus.

26. The method according to claim 25, wherein the allocating a spectrum resource transmitted on the bus comprises:
allocating different frequency band resources or a same frequency band resource to different services.

27. The method according to any one of claims 22 to 26, wherein the method further comprises:
obtaining a topology type of a target link, wherein the topology type comprises a point-to-point topology or a point-to-multipoint topology, and the target link comprises at least two network devices; and
determining a working mode of the network device based on the topology type.

28. The method according to claim 27, wherein the determining a working mode of the network device based on the topology type comprises:
if the topology type is the point-to-point topology, determining that the working mode of the network device comprises enabling an echo cancellation function.

29. The method according to claim 27 or 28, wherein the determining a working mode of the network device based on the topology type comprises:
if the topology type is the point-to-multipoint topology, determining that the working mode comprises a modulation scheme of multi-carrier modulation; or
if the topology type is the point-to-point topology, determining that the working mode comprises a modulation scheme of single-carrier modulation.

30. The method according to any one of claims 27 to 29, wherein the method further comprises: obtaining link transmission information of the target link; and
the determining a working mode of the network device based on the topology type comprises:
determining the working mode of the network device based on the link transmission information and the topology type.

31. The method according to claim 30, wherein the network device is a first network device, and the link transmission information comprises a signal transmission feature; and
the determining the working mode of the network device based on the link transmission information and the topology type comprises:
if the signal transmission feature indicates that a frequency band in which the first network device sends a first signal to a second network device overlaps a frequency band in which the first network device receives a second signal from the second network device, and the topology type is the point-to-multipoint topology, determining that the working mode comprises that a first time period corresponding to the first signal does not intersect with a second time period corresponding to the second signal.

32. The method according to claim 30, wherein the network device is a first network device, and the link transmission information comprises a signal transmission feature; and
the determining the working mode of the network device based on the link transmission information and the topology type comprises:
if the signal transmission feature indicates that a time period in which the first network device sends a first signal to a second network device overlaps a time period in which the first network device receives a second signal from the second network device, and the topology type is the point-to-multipoint topology, determining that the working mode comprises that a first frequency band corresponding to the first signal does not intersect with a second frequency band corresponding to the second signal.

33. The method according to any one of claims 22 to 26, wherein the method further comprises:
obtaining link transmission information; and
if the link transmission information indicates that the network device corresponds to a low-latency target link, determining that a working mode of the network device comprises disabling an error correction encoding and decoding function.

34. A network device, comprising a processor and a memory, wherein
the memory is configured to store computer instructions, and the processor is configured to invoke the computer instructions, to enable the network device to perform the device communication method according to any one of claims 22 to 33.
